# EUROPEAN PATENT SPECIFICATION

(11) **EP 1 583 264 B1**
(45) Date of publication and mention of the grant of the patent: **12.03.2008**
(21) Application number: 05001794.6
(22) Date of filing: 28.01.2005
(51) Int. Cl.: H04B 10/213

(54) **Optical LAN and state monitoring method for electrical load devices**
Optisches LAN und Verfahren zur Überwachung des Zustandes der elektrischen Lasteinrichtungen
Réseau optique local et méthode pour la supervision de l'état des charges électriques

(30) Priority: 31.03.2004 JP 2004105801
(43) Date of publication of application: 05.10.2005
(73) Proprietor: Pacific Industrial Co., Ltd., Ogaki-shi, Gifu-ken 503-8603 (JP)
(72) Inventor: Okubo, Youichi, Ogaki-shi, Gifu-ken 503-8603 (JP); Kawase, Shinichi, Ogaki-shi, Gifu-ken 503-8603 (JP)
(74) Representative: Geyer, Fehners & Partner

(56) References cited:
- EP-A- 0 194 915
- US-A- 4 422 180
- ORMOND T: "FIBER-OPTICS/MICROCOMPUTER COMBINATION REPLACES AUTOMOTIVE WIRING HARNESSES" EDN ELECTRICAL DESIGN NEWS, CAHNERS PUBLISHING CO. NEWTON, MASSACHUSETTS, US, vol. 25, no. 20, 5 November 1980 (1980-11-05), page 79,81, XP001223731 ISSN: 0012-7515

## Description

### BACKGROUND OF THE INVENTION

The invention relates to an optical LAN network according to the preamble of claim 1 including a master node and a plurality of slave nodes that are interconnected with optical fiber cables for configuring the network, and, more particularly, to techniques for monitoring the states of load devices each connected to a slave node. The invention relates further to a method for state motioning of load devices according to the preamble of claim 4.

With the recent trend of electronified vehicles, the number of electrical load devices (electric components) mounted on a vehicle such as motors is increasing steadily. In a typical vehicle, a number of load devices are connected to a control device by relatively heavy metal cables. However, as the number of load devices on a vehicle increases, the total quantity of cables used for the load devices increases. Accordingly, the total weight of the cables has become considerable. Also, as the electronification of vehicles advances, electronic noise added to control signals through cables causes more and more problems, and use of cables limits acceleration of control processes of the load devices.

Accordingly, application of optical LAN networks has recently been proposed, in which, instead of metal cables, optical fiber cables are used to mutually connect a control device and load devices. It is preferable in this case that the control device, which functions as a master node, monitor whether each load device, which functions as a slave node, is properly operating. However, since the use of optical fiber cables in vehicles has just been started, not many documents disclose techniques of such monitoring.

For example, Japanese Laid Open Patent Publication No. 11-313098 discloses an optical LAN device that includes a master node and slave nodes. The publication discloses a technique that adopts a ring type optical LAN device, in which the entire network is prevented from going down even if some of the slave nodes malfunction.

However, the publication No. 11-313098 only discloses a common optical LAN device, but does not disclose any optical LAN device that is suitable for controlling various load devices mounted on a vehicle.

On the other hand, the publication No. 11-286278 discloses a technique used in an electric power steering device for vehicles, in which technique the temperatures of the motor and a control unit are detected to protect the motor and the control unit against excessive heat. The publication No. 11-286278 also recites that the value of a current through the motor in the electric power steering device is detected, and the current is limited based on the detected current value.

However, the publication No. 11-286278 only discloses a technique for controlling the motor in the electric power steering device with the control unit, but does not discloses a vehicle LAN device. The publication No. 11-286278 also does not disclose any optical LAN devices using optical cables.

EP-A-0194915 and its German language family member AT E34951B disclose a device and a method according to the preamble of claims 1 and 5, respectively. US-A-4422180 discloses, amongst others, to use optical LANs in vehicles.

### SUMMARY OF THE INVENTION

Accordingly, it is an objective of the invention to reliably monitor the states of load devices each connected to a slave device in an optical LAN network that includes slave nodes and a master node, which are interconnected by optical fiber cables to configure a network. The invention also shall provide a state monitoring method for load devices in an optical LAN network.

To achieve the above-mentioned objective, the invention provides an optical LAN network according to claim 1. The network includes a master node having a master controller and a plurality of slave nodes. Each slave node has a load device, a state detecting section for detecting the state of the load device, and a slave controller. Each slave node drives the corresponding load device in response to an instruction signal from the master node. Optical fiber cables interconnect the master node and the slave nodes to configure the network. The master controller transmits instruction signals each corresponding to one of the slave nodes to the network. When receiving the corresponding one of the instruction signals from the network, each slave controller adds detection result information based on the state detected by the state detecting section and transmits the instruction signal to the network as a return signal for the master node. Based on the detection result information in each return signal from the network, the master controller acquires the state of the load device that corresponds to the return signal.

Further, the invention provides a state monitoring method for load devices in an optical LAN network according to claim 4. The optical LAN network includes a master node and a plurality of slave nodes that are interconnected with optical fiber cables for configuring the network. The method includes causing the master node to transmit instruction signals each corresponding to one of the slave nodes to the network. The method further includes causing each slave node to receive the corresponding one of the instruction signals from the network; causing each slave node to drive the corresponding load device in response to the corresponding one of the instruction signals. The method further includes causing each slave node to detect the state of the corresponding load device; causing each slave node to add detection result information based on the detected state of the corresponding load device and to transmit the instruction signal to the network as a return signal for the master node. The method further includes causing the master controller to receive the return signals from the network; and causing the master controller to acquire the state of each load device that corresponds to one of the return signals based on the detection result information in the return signal.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic view showing the configuration of an optical LAN network according to one embodiment of the present invention;
Fig. 2 is a view explaining a token signal circulated through the network;
Fig. 3 is a flowchart explaining the operation of the master node; and
Fig. 4 is a flowchart explaining the operation of the slave nodes.

### DETAILED DESCRIPTION OF THE PREFERRED EMBODIMENTS

One embodiment of the present invention will now be described with reference to the drawings.

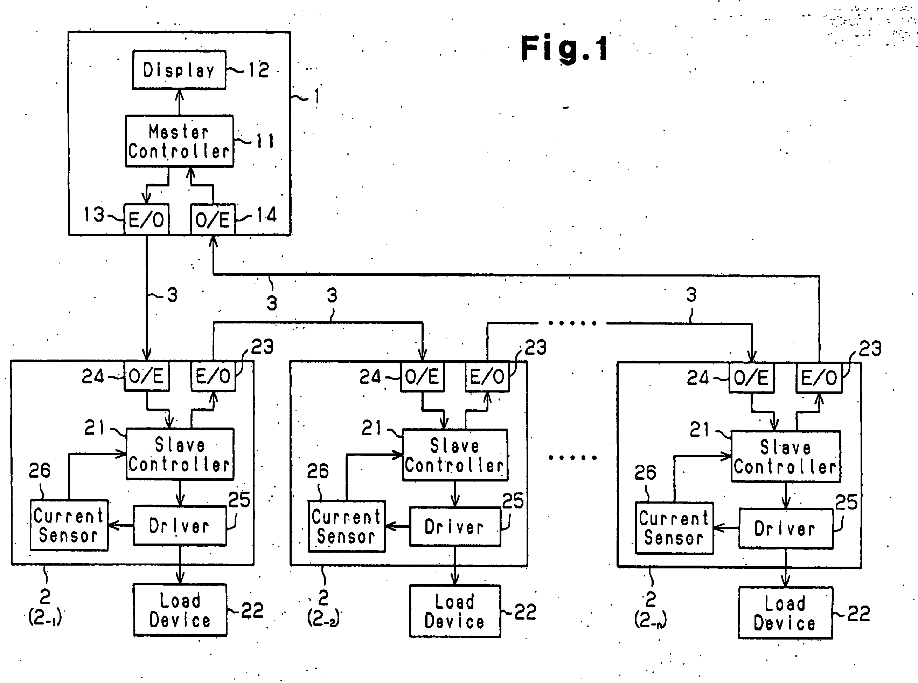

As illustrated in Fig. 1, an optical LAN network according to the present invention is a ring type, which is suitable for vehicles. The ring type optical LAN network includes a master node 1 and a plurality of slave nodes 2, or first to nth slave nodes 2-1 to 2-n. The master node 1 and each of the slave nodes 2 are interconnected by optical fiber cables 3, such that a ring type network is established.

The master node 1 is installed in, for example, an instrument panel of a vehicle (not illustrated). The master node 1 includes a controller (a master controller) 11, which is formed by a microcomputer or the like. The master controller 11 includes, for example, a central processing unit (CPU), a read only memory (ROM), and a random access memory (RAM). A display 12 serving as an annunciator is connected to the master controller 11. The display 12 is exposed on the instrument panel, such that the display 12 is visible to the vehicle operator. The master controller 11 controls the display 12 to indicate the current state of each of the slave nodes 2 by means of characters or codes, when necessary. The display 12 may be replaced by a plurality of indicator lamps provided in the number corresponding to the slave nodes 2. If this is the case, the master controller 11 operates to inform the vehicle operator of the state of any one of the slave nodes 2 by turning on or flashing the corresponding indicator lamp.

An E/O converter (an electrical-to-optical converter) 13 and an O/E converter (an optical-to-electrical converter) 14 are each connected to the master controller 11 by a cable. The E/O converter 13 receives an electrical signal from the master controller 11 through the cable and converts the signal to an optical signal. The optical signal is then transmitted to one of the optical fiber cables 3 that is connected to the E/O converter 13. The O/E converter 14 receives the optical signal from one of the optical fiber cables 3 that is connected to the O/E converter 14, and converts the optical signal to an electrical signal. The electrical signal is then sent to the master controller 11 through the corresponding cable.

The slave nodes 2 are installed in various portions of the vehicle. Each of the slave nodes 2 is connected to a load device 22, which is an electrical component driven by electricity. The load devices 22 include different types of electrical actuators such as motors and lamps. In response to an instruction from the master node 1, each slave node 2 actuates the corresponding load device 22. A specific address is given to each of the slave nodes 2.

Each slave node 2 has a controller (a slave controller) 21, which is formed by a microcomputer or the like. Each of the slave controllers 21 includes, for example, a central processing unit (CPU), a read only memory (ROM), and a random access memory (RAM). An E/O converter (an electrical-optical converter) 23 and an O/E converter (an optical-electrical converter) 24 are each connected to each slave controller 21 by a cable. Each of the E/O converters 23 receives an electrical signal from the corresponding slave controller 21 through the cable and converts the signal to an optical signal. The optical signal is then transmitted to one of the optical fiber cables 3 that is connected to the E/O converter 23. Each of the O/E converters 24 receives the optical signal from one of the optical fiber cables 3 that is connected to the O/E converter 24, and converts the optical signal to an electrical signal. The electrical signal is then sent to the corresponding slave controller 21 through the corresponding cable.

Each of the load devices 22 is connected to the corresponding one of the slave controllers 21 by means of a driver (drive circuit) 25. Each slave controller 21 actuates the corresponding load device 22 by controlling the associated driver 25. Each slave node 2 has a current detecting section, which is a current sensor 26. The current sensor 26 in each slave node 2 detects the value of current supplied to the corresponding load device 22 from the driver 25, or the value of current through the load device 22, and sends a signal representing the detected current value to the corresponding slave controller 21. Known current sensors may be used as the current sensors 26. For example, sensors having a shunt resistor and a signal amplifier are suitable to be used as the current sensors 26.

In the illustrated optical LAN network, the token passing method is employed as the access control method. More specifically, the master node 1 sends a token signal to the network, or the optical transmission line configured by the optical fiber cables 3, as an instruction signal. The instruction signal includes address information of the slave node 2 to which the signal is addressed, as well as various types of instruction information. The instruction signal sent by the master node 1 is first received by the first slave node 2-1. If the address included in the instruction signal matches that of the first slave node 2-1, the first slave node 2-1 executes an operation according to instruction information of the instruction signal. Further, based on the current value detected by the current sensor 26, the first slave node 2-1 obtains the detection result information indicating the operating state of the corresponding load device 22. Then, the first slave node 2-1 adds the detection result information to the instruction signal. The instruction signal is transmitted to the network as a return signal for the master node 1. However, if the address included in the instruction signal does not match that of the first slave node 2-1, the first slave node 2-1 simply transmits the instruction signal to the network.

The token signal (the return or instruction signal) transmitted from the first slave node 2-1 to the network is received by the second slave node 2-2. The second slave node 2-2 executes an operation in accordance with the received token signal, like the first slave node 2-1. The token signal is then passed to the subsequent slave node 2. In this manner, the token signal transmitted by the master node 1 as the instruction signal is passed successively from the first slave node 2-1 to the nth slave node 2-n. The final slave node 2-n transmits the token signal to the network, such that the master node 1 receives the token signal as the return signal. Based on the detection result information in the return signal from the network, the master node 1 acquires the state of the load device 22 connected to the slave node 2 that corresponds to the return signal.

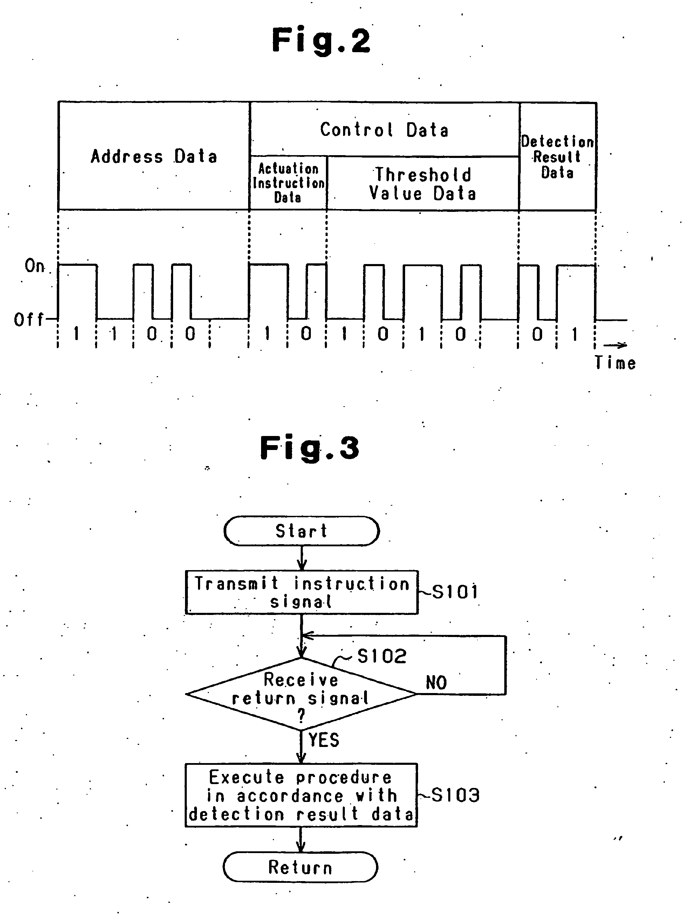

Fig. 2 illustrates a token signal circulated through the network including the master node 1 and the slave nodes 2. The token signal includes address data, control data, and detection result data. The address data is information indicating the address of the slave node 2 to which the token signal is addressed. The control data is information indicating instructions to the addressed slave node 2, including actuation instruction data and threshold value data. The actuation instruction data is information indicating an instruction related to the actuation of the load device 22. For example, the actuation instruction data includes information indicating a driving instruction or a stopping instruction, and an output increasing instruction or an output decreasing instruction. The threshold value data is information indicating a threshold value of current through the load device 22. Each slave node 2 compares the current value detected by the current sensor 26 with the threshold value, thereby determining the load state of the corresponding load device 22.

The detection result data is information representing the detection result information obtained at the slave node 2, that is, information representing the detection result of the current sensor 26. In this embodiment, the detection result data represents one of an overcurrent state, a break state, and a normal state of the load device 22.

The master node 1 transmits the token signal including the address data and control data to the network as the instruction signal. If the address included in the instruction signal matches the address of any one of the slave nodes 2, the slave node 2 adds the detection result data to the instruction signal. The instruction signal is then transmitted to the network as the return signal directed to the master node 1.

The address data, the control data, and the detection result data are configured by binary code signals having a plurality of bits. In this case, each of the data is represented by a bit digit string configured by an ON state and an OFF state of the optical signal generated by the E/O converters 13, 23 in the optical fiber cables 3. In this embodiment, as shown in Fig. 2, the bit code "0" is configured by a single cycle of a symmetrical square wave signal, or a combination of an ON signal and an OFF signal. The bit code "1" is configured by the ON signal or OFF signal maintained for the period corresponding to one cycle of the aforementioned symmetrical square wave signal.

In the example Fig. 2, the address data is expressed as four-bit data, and the actuation instruction data in the control data is expressed as two-bit data. The threshold value data in the control data is expressed as four-bit data, and the detection result data is expressed as two-bit data. In other words, the address data is capable of indicating a maximum of sixteen addresses, and the actuation instruction data is capable of indicating a maximum of four instructions. The threshold value data is capable of indicating a maximum of sixteen threshold values, and the detection result data is capable of indicating a maximum of four detection results. The bit count of each data may be changed as necessary.

In order to clearly distinguish the address data, the control data, and the detection result data from each other, a predetermined OFF period is given to the tail of the address data and the control data.

Now, the operation of the master node 1 will be explained with reference to the flowchart of Fig. 3.

In step S101, the master controller 11 transmits an instruction signal to the network through the E/O converter 13. The instruction signal includes the address data representing the address of the slave node 2 to which the instruction signal is addressed, and the control data representing an instruction to the slave node 2.

In step S102, the master controller 11 is held in a waiting state until the master controller 11 receives the return signal corresponding to the transmitted instruction signal from the network through the O/E converter 14. When receiving the return signal, the master controller 11 executes a procedure as needed in accordance with the detection result data in the return signal at the subsequent step S103. The procedure is then suspended. More specifically, based on the detection result data in the return signal, the master controller 11 determines which one of the break state, the overcurrent state, and the normal state the load device 22 connected to the slave node 2 that corresponds to the return signal is in.. If the load device 22 is in the overcurrent state or the break state, the master controller 11 displays information representing the state of the load device 22 on the display 12.

The master controller 11 consecutively executes the above-described process for each of the slave nodes 2. When transmitting the next instruction signal to the same slave node 2, the master controller 11 may instruct the associated load device 22 to increase or decrease the output using the actuation instruction data in the instruction signal based on the state of the load device 22, which state has been obtained from the return signal, or based on other factors.

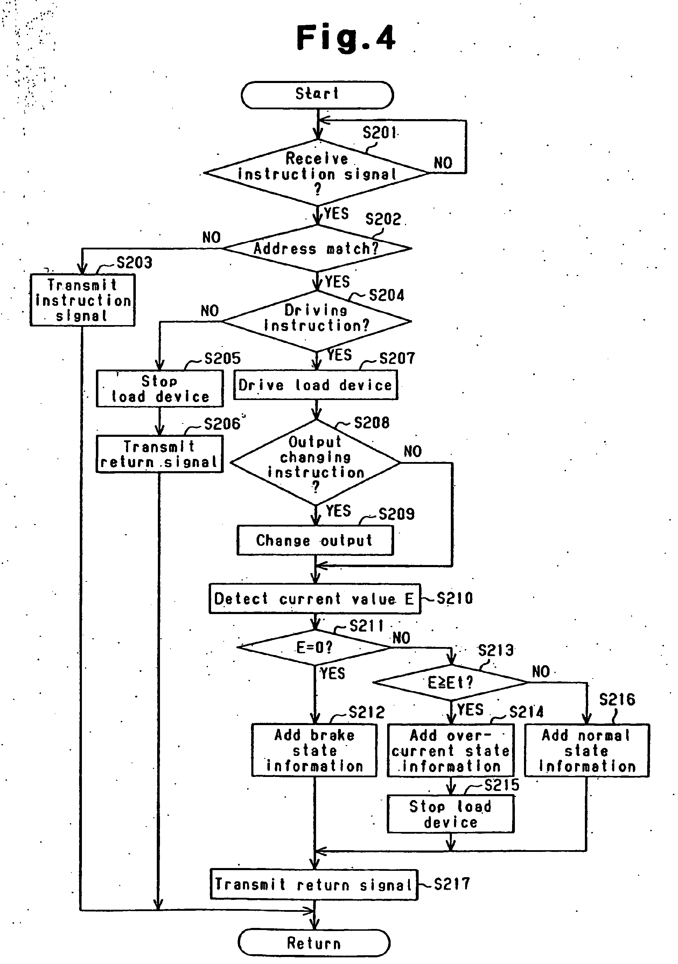

Hereafter, the operation of each of the slave nodes 2 will be explained with reference to the flowchart of Fig. 4.

In step S201, the slave controller 21 of each slave node 2 is held in a waiting state until the slave controller 21 receives an instruction signal from the network through the corresponding O/E converter 24. If the slave controller 21 receives the instruction signal, the procedure proceeds to step S202. That is, the slave controller 21 determines whether or not the address represented by the address data of the instruction signal matches its own address. If the determination is negative, the slave controller 21 simply transmits the instruction signal to the network through the corresponding E/O converter 23, without adding the detection result data to the received instruction signal. The procedure is then suspended. In contrast, if the determination of step S202 is positive, the procedure executed by the slave controller 21 proceeds to step S204.

In step S204, the slave controller 21 determines whether or not the instruction indicated by the actuation instruction data in the instruction signal is a driving instruction of the load device 22. If the instruction is not a driving instruction, or if the instruction is a stopping instruction of the load device 22, the procedure proceeds to step S205. That is, the slave controller 21 controls the driver 25 to stop the corresponding load device 22. In the subsequent step S206, the slave controller 21 transmits a return signal to the network through the E/O converter 23. The procedure is then suspended. At this time, the slave controller 21 may add information indicating the stop of the load device 22 as detection result data to the instruction signal, and transmit the instruction signal with the detection result data as the return signal.

On the other hand, if the instruction is a driving instruction at step 204, the procedure proceeds to step S207. That is, the slave controller 21 controls the driver 25 to drive the corresponding load device 22. In the subsequent step S208, the slave controller 21 determines whether or not the instruction indicated by the actuation instruction data in the instruction signal contains instruction for changing the output of the load device 22 (output increasing instruction of output decreasing instruction). If the instruction includes an output changing instruction, the procedure proceeds to step S209. That is, the slave controller 21 controls the driver 25 to change (increase or decrease) the output of the corresponding load device 22. Then, the procedure proceeds to step S210. On the other hand, if the instruction does not include an output changing instruction, the slave controller 21 does not executes the process of step S209, and the procedure proceeds to step S210.

At step S210, the slave controller 21 detects a value E of current through the corresponding load device 22 by means of the current sensor 26. At the subsequent step S211, the slave controller 21 determines whether the detected current value E is zero. If the current value E is zero, that is, if no current is passing through the load device 22, the slave controller 21 determines that the load device 22 is in a break state. Then, the procedure proceeds to step S212. At step S212, the slave controller 21 adds detection result data as information indicating the break state to the instruction signal. The procedure then proceeds to step S217.

On the other hand, when the detected current value E is not zero, the procedure proceeds to step S213, where the slave controller 21 determines whether the current value E is greater than or equal to a threshold value Et indicated by the threshold value data in the instruction signal. If the current value E is greater than or equal to the threshold value Et, the slave controller 21 determines that the load device 22 is in an overcurrent state, or that the load device 22 is in an overload state. Then, the procedure proceeds to step S214. At step S214, the slave controller 21 adds information representing the overcurrent state as the detection result data to the instruction signal. At the subsequent step S215, the slave controller 21 controls the driver 25 to stop the load device 22, that is, to stop the supply of current to the load device 22. Then, the procedure proceeds to step S217.

On the other hand, when the detected current value E is less than the threshold value Et, the slave controller 21 determines that the load device 22 is functioning normally. Then, the procedure proceeds to step S216. At step S216, the slave controller 21 adds detection result data as information indicating a normal state to the instruction signal. The procedure then proceeds to step S217.

At step S217, the slave controller 21 transmits, as a return signal to the master node 1, the instruction signal to which the detection result data has been added to the network. The procedure is then suspended.

This embodiment provides the following advantages.
(1) Each slave node 2 detects the value of current through the corresponding load device 22. When receiving an instruction signal addressed to itself from the master node 1 through the network, each slave node 2 adds detection result data based on the detected current value to the instruction signal, and transmits the instruction signal to the network as a return signal to the master node 1. Based on the detection result data in the return signal from the network, the master node 1 acquires the state of the load device 22 connected to the slave node 2 corresponding to the return signal. Therefore, the master node 1 is capable of constantly reliably monitoring the state of the load device 22 connected to each slave node 2 and of reliably detecting abnormality in any of the slave nodes 2 at an early stage.
(2) Based on a detected current value, each slave node 2 determines which one of the overcurrent state, the break state, and the normal state the corresponding load device 22 is in, and adds information representing the determined state as detection result data to the instruction signal. Therefore, the detection result data only needs to be two-bit data capable of indicating the three states, which shortens the data length of data transmitted through the network. This is advantageous for stable and reliable communications through the network.
(3) Each slave node 2 compares a detected current value with the threshold value, thereby determining the state of the corresponding load device 22. This permits the state of the load device 22 to be easily determined.
(4) If a detected current value is greater than or equal to the threshold value, each slave node 2 stops the supply of current to the corresponding load device 22. Therefore, if any of the load devices 22 malfunctions, that load device 22 is stopped at an early stage so that it is prevented from breaking down.
(5) Each slave node 2 sets the threshold value according to the threshold value data in the instruction signal from the master node 1. Thus, the slave node 2 does not need to store data related to the threshold value. Also, the master node 1 is capable of setting threshold values each suitable for one of the slave nodes 2 using the threshold value data of four-bit data, and capable of changing the threshold value for each slave node 2. Therefore, in accordance with the conditions in which the device is used, the threshold value can be always optimized for each slave node 2. Accordingly, the state of each slave node 2 is further reliably monitored.

The above embodiment may be modified as follows.

Instead of or in addition to the current sensors 26, temperature sensors for detecting the temperature of the load devices 22 may be provided as state detecting sections. In this case, the state of each load device 22 may be determined based on the temperature of the load device 22, which is detected by the temperature sensor.

The optical LAN network according to the present invention may be used in situations other than use in vehicles.

The optical LAN network according to the present invention may be applied to any optical LAN networks other than ring type optical LAN networks. For example, the optical LAN device may be applied to a bus type optical LAN network.

The present examples and embodiments are to be considered as illustrative and not restrictive and the invention is not to be limited to the details given herein, but may be modified within the scope of protection of the appended claims.

## Claims

1. An optical LAN, comprising
a master node (1) having a master controller (11);
a plurality of slave nodes (2), each slave node (2) having a load device (22), a state detecting section (26) for detecting the state of the load device (22), and a slave controller (21), wherein each slave node (2) drives the corresponding load device (22) in response to an instruction signal from the master node (1);
the master controller (11) transmits instruction signals each corresponding to one of the slave nodes (2) over said network,
wherein, when receiving the corresponding one of the instruction signals from the network, each slave controller (2) adds detection result information based on the state detected by the state detecting section (26) and transmits the instruction signal to the network as a return signal for the master node (1),
wherein, based on the detection result information in each return signal from the network, the master controller (11) acquires the state of the load device (22) that corresponds to the return signal, and wherein the load devices (22) are electrical load devices that are driven by electricity, and wherein the state detecting sections are at least one of current detecting sections (26) detecting the value of a current through the corresponding electrical load device (22) and temperature detecting sections detecting the value of a temperature of the load device (22), wherein each slave controller (21) compares the value detected by the corresponding state detecting section (26) with a predetermined threshold value, thereby determining the state of the corresponding electrical load device (22) **characterized in that**
optical fiber cables (3) interconnect the master node (1) and the slave nodes (2) to configure the network, and
wherein each instruction signal includes information indicating the threshold value, and wherein each slave controller (21) compares the current value detected by the corresponding current detecting section (26) with the threshold value in the corresponding instruction signal.

2. The optical LAN according to claim 1, **characterized in that**, the state detecting sections are current detecting sections (26) and that based on the current value detected by the corresponding current detecting section (26), each slave controller (21) determines which one of an overload state, a state in which no current flows through the load device (22), and a normal state the corresponding electrical load device (22) is in, and adds information representing the determined state as the detection result information to the instruction signal.

3. The optical LAN according to claim 1, **characterized in that**, if the value detected by the corresponding state detecting section (26) is greater than or equal to the threshold value, each slave controller (21) stops the supply of current to the corresponding electrical load device (22).

4. A state monitoring method for load devices in an optical LAN the optical LAN including a master node (1) comprising a master controller (11) and a plurality of slave nodes (2) that are interconnected through said network, wherein the load devices (22) are provided as electrical load devices (22) which are driven by electricity, the slave nodes (2) are provided with state detecting sections (26) which are at least one of current detecting sections detecting the value of a current through the corresponding electrical load device (22) and temperature detecting sections detecting the value of a temperature of the load device (22), each slave node (2) compares the value detected by the corresponding state detecting section (26) with a predetermined threshold value to detect the state of the load device (22), which method comprises
causing the master node (1) to transmit instruction signals each corresponding to one of the slave nodes (2) through the network;
causing (S202) each slave node (2) to receive the corresponding one of the instruction signals from the master node (1);
causing (S207) each slave node (2) to drive the corresponding load device (22) in response to the corresponding one of the instruction signals;
causing (S210) each slave node (2) to detect the state of the corresponding load device (22);
causing (S212, S214, S216) each slave node (2) to add detection result information based on the detected state of the corresponding load device (22) and to transmit (S217) the instruction signal as a return signal for the master node (1);
causing the master controller (11) to receive the return signals from the slave nodes (2); and
causing the master controller (11) to acquire the state of each load device (22) that corresponds to one of the return signals based on the detection result information in the return signal,
**characterized in that**
the master (1) and the slave nodes (2) are interconnected with optical fiber cables for configuring the network, ,
wherein the master node (1) transmits the threshold values to the slave nodes (2) through the network.

## Patentansprüche

1. Optisches LAN mit
einem Master-Knoten (1), der einen Master-Controller (11) aufweist;
mehreren Slave-Knoten (2), die jeweils eine Lastvorrichtung (22), einen Zustandsdetektionsabschnitt (26) zum Detektieren des Zustands der Lastvorrichtung (22) und
einen Slave-Controller (21) aufweisen, wobei jeder Slave-Knoten (2) die entsprechende Lastvorrichtung (22) als Reaktion auf ein Befehlssignal vom Master-Knoten (1) ansteuert;
der Master-Controller (11) Befehlssignale, die jeweils einem der Slave-Knoten (2) entsprechen, über das Netzwerk sendet,
wobei jeder Slave-Controller (2) Detektionsergebnisinformationen aufgrund des vom Zustandsdetektionsabschnitt (26) detektierten Zustands hinzufügt und das Befehlssignal als ein Rücksignal für den Master-Knoten (1) an das Netzwerk sendet, wenn eines der entsprechenden Befehlssignale vom Netzwerk empfangen wird,
wobei der Master-Controller (11), ausgehend von den Detektionsergebnisinformationen in jedem Rücksignal vom Netzwerk, dem Rücksignal entsprechend den Zustand der Lastvorrichtung (22) erfaßt und die Lastvorrichtungen (22) elektrische Lastvorrichtungen sind, die elektrisch betrieben werden, und
wobei die Zustandsdetektionsabschnitte Stromdetektionsabschnitte (26), die den Wert eines Stroms durch die entsprechende elektrische Lastvorrichtung (22) detektieren, und/oder Temperaturdetektionsabschnitte sind, die den Wert einer Temperatur der Lastvorrichtung (22) detektieren,
wobei jeder Slave-Controller (21) den vom entsprechenden Zustandsdetektionsabschnitt (26) detektierten Wert mit einem vorbestimmten Schwellwert vergleicht und **dadurch** den Zustand der entsprechenden elektrischen Lastvorrichtung (22) bestimmt, **dadurch gekennzeichnet, daß**
Optikfaserkabel (3) den Master-Knoten (1) mit den Slave-Knoten (2) verbinden, um das Netzwerk zu bilden, und
wobei jedes Befehlssignal Informationen enthält, die den Schwellwert anzeigen, und wobei jeder Slave-Controller (21) den vom entsprechenden Stromdetektionsabschnitt (26) detektierten Stromwert mit dem Schwellwert im entsprechenden Befehlssignal vergleicht.

2. Optisches LAN nach Anspruch 1, **dadurch gekennzeichnet, daß** die Zustandsdetektionsabschnitte Stromdetektionsabschnitte (26) sind und ausgehend vom Stromwert, der vom entsprechenden Stromdetektionsabschnitt (26) detektiert wurde, jeder Slave-Controller (21) feststellt, ob sich die entsprechende elektrische Lastvorrichtung (22) in einem Überlastzustand, in dem kein Strom durch die Lastvorrichtung (22) fließt, oder in einem Normalzustand befindet, und Informationen, die den festgestellten Zustand wiedergeben, als Detektionsergebnisinformationen zu dem Befehlssignal hinzufügt.

3. Optisches LAN nach Anspruch 1, **dadurch gekennzeichnet, daß** jeder Slave-Controller (21) die Stromversorgung der entsprechenden elektrischen Lastvorrichtung (22) abbricht, wenn der von dem entsprechenden Zustandsdetektionsabschnitt (26) detektierte Wert größer oder gleich dem Schwellwert ist.

4. Zustandsüberwachungsverfahren für Lastvorrichtungen in einem optischen LAN, wobei das optische LAN einen Master-Knoten (1) mit einem Master-Controller (11) und mehrere Slave-Knoten (2) umfaßt, die über das Netzwerk miteinander verbunden sind, wobei die Lastvorrichtungen (22) als elektrische Lastvorrichtungen (22) vorgesehen sind, die elektrische betrieben werden,
die Slave-Knoten (2) mit Zustandsdetektionsabschnitten (26) versehen sind, die Stromdetektionsabschnitte, welche den Wert eines Stroms durch die entsprechende elektrische Lastvorrichtung (22) detektieren, und/oder Temperaturdetektionsabschnitte sind, die den Wert einer Temperatur der Lastvorrichtung (22) detektieren,
jeder Slave-Knoten (2) den von dem entsprechenden Zustandsdetektionsabschnitt (26) detektierten Wert mit einem vorbestimmten Schwellwert vergleicht, um den Zustand der Lastvorrichtung (22) zu detektieren, wobei das Verfahren umfaßt
Veranlassen des Master-Knotens (1), Befehlssignale, die jeweils einem der Slave-Knoten (2) entsprechen, über das Netzwerk zu senden;
Veranlassen (S202) jedes Slave-Knotens (2), das entsprechende der Befehlssignale vom Master-Knoten (1) zu empfangen;
Veranlassen (S207) jedes Slave-Knotens (2), die entsprechende Lastvorrichtung (22) als Reaktion auf das entsprechende Befehlssignal anzusteuern;
Veranlassen (S210) jedes Slave-Knotens (2), den Zustand der entsprechenden Lastvorrichtung (22) zu detektieren;
Veranlassen (S212, S214, S216) jedes Slave-Knotens (2), Detektionsergebnisinformationen, die auf dem detektierten Zustand der entsprechenden Lastvorrichtung (22) beruhen, hinzuzufügen und das Befehlssignal als Rücksignal für den Master-Knoten (1) zu senden (S217);
Veranlassen des Master-Controllers (11), die Rücksignale von den Slave-Knoten (2) zu empfangen; und
Veranlassen des Master-Controllers (11), den Zustand jeder Lastvorrichtung (22), der einem der Rücksignale entspricht, anhand der Detektionsergebnisinformationen im Rücksignal zu erfassen, **dadurch gekennzeichnet, daß**
der Master- (1) und die Slave-Knoten (2) über Optikfaserkabel miteinander verbunden sind, um das Netzwerk zu bilden,
wobei der Master-Knoten (1) die Schwellwerte über das Netzwerk an die Slave-Knoten (2) sendet.

## Revendications

1. Réseau local optique (LAN) comprenant :
un noeud maître (1) ayant un contrôleur maître (11) ;
une pluralité de noeuds esclaves (2), chaque noeud esclave (2) ayant un dispositif de charge (22), une section de détection d'état (26) pour détecter l'état du dispositif de charge (22), et un contrôleur esclave (21), où chaque noeud esclave (2) commande le dispositif de charge correspondant (22) en réponse à un signal d'instruction provenant du noeud maître (1) ;
le contrôleur maître (11) transmet des signaux d'instruction correspondant chacun à un des noeuds esclaves (2) sur ledit réseau,
dans lequel, lorsqu'il est reçu le signal correspondant des signaux d'instruction provenant du réseau, chaque contrôleur esclave (2) ajoute des informations de résultat de détection basées sur l'état détecté par la section de détection d'état (26) et transmet le signal d'instruction au réseau sous la forme d'un signal de retour pour le noeud maître (1),
dans lequel, en se basant sur les informations de résultat de détection dans chaque signal de retour provenant du réseau, le contrôleur maître (11) acquiert l'état du dispositif de charge (22) qui correspond au signal de retour, et dans lequel les dispositifs de charge (22) sont des dispositifs de charge électrique commandés par de l'électricité, et où les sections de détection sont au moins une section parmi des sections de détection de courant (26) détectant la valeur d'un courant à travers le dispositif de charge électrique correspondant (22) et des sections de détection de température détectant la valeur d'une température du dispositif de charge (22),
dans lequel chaque contrôleur esclave (21) compare la valeur détectée par la section de détection d'état correspondante (26) à une valeur seuil prédéterminée, en déterminant par ce moyen l'état du dispositif de charge électrique correspondant (22), **caractérisé en ce que**
des câbles à fibre optique (3) interconnectent le noeud maître (1) et les noeuds esclaves (2) pour configurer le réseau, et
dans lequel chaque signal d'instruction comprend des informations indiquant la valeur seuil, et dans lequel chaque contrôleur esclave (21) compare la valeur de courant détectée par la section de détection de courant correspondante (26) à la valeur seuil dans le signal d'instruction correspondant.

2. Réseau local optique (LAN) selon la revendication 1, **caractérisé en ce que** les sections de détection d'état sont des sections de détection de courant (26) et que, en se basant sur la valeur de courant détectée par la section de détection de courant correspondante (26), chaque contrôleur esclave (21) détermine dans quel état, parmi un état de surcharge - un état dans lequel aucun courant ne s'écoule à travers le dispositif de charge (22) - et un état normal, est le dispositif de charge électrique correspondant (22), et ajoute au signal d'instruction des informations représentant l'état déterminé en tant qu'informations de résultat de détection.

3. Réseau local optique (LAN) selon la revendication 1, **caractérisé en ce que**, si la valeur détectée par la section de détection d'état correspondante (26) est supérieure ou égale à la valeur seuil, chaque contrôleur esclave (21) arrête la délivrance de courant au dispositif de charge électrique correspondant (22).

4. Procédé de supervision d'état pour dispositifs de charge dans un réseau local optique (LAN), le LAN comprenant un noeud maître (1) avec un contrôleur maître (11) et une pluralité de noeuds esclaves (2) qui sont interconnectés à travers ledit réseau, dans lequel les dispositifs de charge (22) sont pourvus en tant que dispositifs de charge électrique (22) qui sont commandés par de l'électricité, les noeuds esclaves (2) sont pourvus de sections de détection d'état (26) qui sont au moins une section parmi des sections de détection de courant détectant la valeur d'un courant à travers le dispositif de charge électrique correspondant (22) et des sections de détection de température détectant la valeur d'une température du dispositif de charge (22),
chaque noeud esclave (2) compare la valeur détectée par la section de détection d'état correspondante (26) à une valeur seuil prédéterminée pour détecter l'état du dispositif de charge électrique (22),
le procédé comprenant les étapes consistant à faire en sorte :
que le noeud maître (1) transmette des signaux d'instruction, chacun correspondant à un des noeuds esclaves (2) à travers le réseau ;
(S202) que chaque noeud esclave (2) reçoive le signal correspondant des signaux d'instruction depuis le noeud maître (1) ;
(S207) que chaque noeud esclave (2) commande le dispositif de charge correspondant (22) en réponse au signal correspondant des signaux d'instruction ;
(S210) que chaque noeud esclave (2) détecte l'état du dispositif de charge correspondant (22) ;
(S212, S214, S216) que chaque noeud esclave (2) ajoute des informations de résultat de détection basées sur l'état détecté du dispositif de charge correspondant (22) et transmette (S217) le signal d'instruction sous la forme d'un signal de retour pour le noeud maître (1);
que le contrôleur maître (11) reçoive les signaux de retour depuis les noeuds esclaves (2) ; et
que le contrôleur maître (11) acquière l'état de chaque dispositif de charge (22) qui correspond à un des signaux de retour basés sur les informations de résultat de détection dans le signal de retour,
**caractérisé en ce que**
le noeud maître (1) et les noeuds esclaves (2) sont interconnectés avec des câbles à fibre optique pour configurer le réseau,
le noeud maître (1) transmettant les valeurs seuil aux noeuds esclaves (2) à travers le réseau.
